# EUROPEAN PATENT APPLICATION

(11) **EP 4 481 608 A1**
(43) Date of publication of application: **25.12.2024**
(21) Application number: 24161540.0
(22) Date of filing: 05.03.2024
(51) Int. Cl.: G06F 21/62, H04L 9/40

(54) **SYSTEM AND METHOD FOR SECURE DATA TRANSMISSION**

(30) Priority: 22.06.2023 EP 23180999
(71) Applicant: Vioonic GmbH, 72770 Reutlingen (DE)
(72) Inventor: Fogarty, Barry, 72764 Reutlingen (DE)
(74) Representative: Stellbrink & Partner Patentanwälte mbB

(57) **Abstract**

Disclosed are a method, a system and a plurality of computer program products. The method comprises an acquisition step comprising processing patient data by a first device. The method further comprises a transport encryption step comprising splitting said patient data into a plurality of patient data elements, and afterwards encrypting each patient data element, thus obtaining encrypted data elements corresponding to the respective patient data elements. The transport encryption step is performed by the first device. The method further comprises a patient data transmission step comprising transmitting the encrypted data elements to a second device. The method also comprises a decryption step comprising decrypting the encrypted data elements to obtain decrypted data elements and assemble the decrypted data elements to obtain decrypted patient data, wherein the decryption step is performed by the second device. The system comprises a first device and a second device. The system is configured for performing the method. Further, a computer program product comprises instructions which, when the program is executed by the first device, cause the first device to perform the acquisition step and the transport encryption step. Another computer program product comprises instructions which, when the program is executed by the second device, cause the second device to perform the decryption step.

## Description

The present invention relates to the field of secure communication and data storage.

Methods and systems for secure communication and data storage by means of cryptographic methods are generally known in the art. Typically, these methods comprise two essential steps: Key exchange/agreement (using asymmetric encryption to agree on a symmetric key) and data transmission (using the symmetric key). In such a case, breaking the symmetric encryption, e.g., by brute force trial and error of the symmetric key, may result in accessibility of the decrypted transmitted data for third party.

Further, data storage regularly poses a comparable problem. In particular in case of end user devices, access of the data may occur e.g. in case of theft of the device.

In particular when dealing with sensitive data, such as patient data, the risk of unauthorized access is problematic. Further, the amount of data may be significant, e.g. in case of medical image data.

While the prior art approaches may be satisfactory in some regards, they have certain shortcomings and disadvantages.

It is therefore an object of the invention to overcome or at least alleviate the shortcomings and disadvantages of the prior art. More particularly, it is an object of the present invention to provide a method, system and computer program product for secure data transmission.

It is an optional objective of the present invention to provide a method, system and computer program product for secure data storage.

In a first embodiment, a method is disclosed.

The method comprises an acquisition step comprising processing patient data by a first device.

The method further comprises a transport encryption step comprising splitting said patient data into a plurality of patient data elements. Further, the transport encryption step comprises encrypting each patient data element, thus obtaining encrypted data elements corresponding to the respective patient data elements. In particular, the encrypting is performed after the splitting.

The method also comprises patient data transmission step comprising transmitting the encrypted data elements to a second device.

Additionally, the method comprises decryption step comprising decrypting the encrypted data elements (64) to obtain decrypted data elements and assemble the decrypted data elements to obtain decrypted patient data.

The transport encryption step may be performed by the first device.

The decryption step may be performed by the second device.

The acquisition step may comprise at least one of acquiring and receiving the patient data by the first device.

The patient data may comprise image data.

The patient data may comprise an indication of an identity of a patient, such as a name, a date of birth or an ID-number or ID-string.

The patient data may comprise audio data.

The acquisition step may comprise encrypting the patient data using at least one symmetric key associated with the first device and thus obtaining first device encrypted patient data.

A key associated with the first device may particularly be associated with a user of the first device and/or a user profile loaded at the first device. The user profile loaded at the first device may e.g., correspond to a user logged in at the first device, a last user that was logged in at the first device, or a user profile that is associated with the first device.

The acquisition step may comprise storing the first device encrypted patient data on a first device memory. The first device may comprise the first device memory.

The acquisition step may comprise performing the encrypting of the patient data using the at least one symmetric key associated with the first device according to a symmetric encryption algorithm selected based on a type of the first device and/or an operating system of the first device.

The selection may for example be dependent on algorithms supported by the device and/or provided by the operating system of the first device. Thus, optionally advantageously, an efficiency of the encryption may be increased.

The acquisition step may comprise deleting at least a portion of the first device encrypted patient data from the first device once said portion is stored at least for a predetermined time on the first device, particularly for at least 30 days. Thus, optionally advantageously, patient data that are no longer needed will not be exposed in case of loss of device or a successful attack compromising a security of the device.

The method may comprise an initialisation step.

The initialisation step may comprise the first device generating a first device private key set and a corresponding first device public key set. Each of these sets may comprise at least one key.

The initialisation step may further comprise the second device generating a second device private key set and a corresponding second device public key set, wherein each set comprises at least one key.

Each of the key sets may comprise at least three keys. In other words, there may be at least three private keys in the first device private key set, at least three private keys in the second device private key set, at least three public keys in the first device public key set, and at least three public keys in the second device public key set.

Generating the sets of corresponding keys may comprise creating an elliptic curve for every pair of private and public keys. The elliptic curve may for example be according to NIST curve P-256.

The method may comprise transmitting the first device public key set to the second device and the second device public key set to the first device.

Transmitting the first device public key set to the second device and the second device public key set to the first device may comprise the steps of
- transmitting the first device public key set (23) from the first device (10) to a server system (80),
- transmitting the second device public key set (43) from the second device (30) to the server system (80),
- transmitting the first device public key set (23) from the server system (80) to the second device (30), and
- transmitting the second device public key set (43) from the server system (80) to the first device (10).

The method may comprise inhibiting transmission of patient data to an end-user device for which no public key set has been transmitted to the server system. For example, in a software application implementing the disclosed method, sending these data to other devices may not be enabled.

The method may comprise a key agreement step. The key agreement step may comprise agreement of a set of shared symmetric keys between the first and second device based on the first and second device public key set. The set of shared symmetric keys may comprise at least one shared symmetric key.

The set of symmetric keys may be agreed upon by Diffie Hellman Key agreement. In other words, the key agreement may be performed according to the Diffie Hellman Key agreement algorithm.

The set of symmetric keys may be agreed by Elliptic curve Diffie Hellman Key agreement.

In other words, the method may comprise performing key agreement according to the Elliptic curve Diffie Hellman Key agreement algorithm.

The set of symmetric keys may comprise at least three shared symmetric keys agreed by Diffie Hellman Key agreement based on the at least three public and private keys of the first and second device public and private key sets.

The key agreement step may comprise using a salt before transmission of the shared symmetric key. The salt may be generated based on an ID of the first device and an ID of the second device. The device IDs may also be user IDs, such as IDs of a user using the device.

The transport encryption step may be performed by the first device.

The patient data may be stored in one file. The file may for example be a container file. The transport encryption step may comprise splitting this file so as to obtain the plurality of patient data elements.

In other words, the file may be of a container file format, such as .zip-file, and suitable for containing a plurality of files. The container file may also be referred to as metafile or wrapper.

Storing may refer to storing the data with or without compression in said file.

Splitting the file may comprise splitting a binary code of the file.

In some embodiments, a file size of the patient data elements may differ at most by 10% of a size a largest patient data element, particularly at most by 5% of a largest patient data element.

In some embodiments, the patient data elements may comprise substantially a same file size.

The transport encryption step may comprise encrypting each patient data element by symmetric encryption using the set of shared symmetric keys.

The transport encryption step may comprise encrypting each patient data element by symmetric encryption using a different key from the set of shared symmetric keys.

That is, the keys used for each data element may be selected from the set of shared symmetric keys. In other words, optionally, no key may be used for more than one patient data element per transport encryption step.

The transport encryption step may comprise splitting the patient data into a plurality of n patient data elements, wherein n <= a number of symmetric keys in the set of shared symmetric keys.

The literal n may indicate a natural number, i.e., a positive integer, indicating a quantity of the patient data elements.

For example, the splitting may be achieved by dividing the binary code corresponding to a message into n data elements and encryption each element with a different key from the set of shared of symmetric keys.

The transport encryption step may further comprise storing the encrypted patient data elements in one file, particularly a container file containing the encrypted patient data elements.

The transport encryption step may comprise decrypting the first device encrypted patient data using the at least one symmetric key associated with the first device before splitting the patient data.

The patient data elements are encrypted in the transport encryption step according to the ChaCha20Poly1305 algorithm.

The decryption step may be performed by the second device.

The decryption step may comprise decrypting each patient data element by symmetric encryption using the set of shared symmetric keys.

The decryption step may comprise decrypting each patient data element by symmetric decryption using a corresponding key from the set of shared symmetric keys.

The corresponding key may be identified by trial and error. In other words, the symmetric keys may be matched to the encrypted data elements by successive of simultaneous decryption attempts until a decryption attempt with one of the keys is successful.

The method may comprise a processing step performed by the second device.

The processing step may comprises encrypting the decrypted patient data using at least one symmetric key associated with the second device and thus obtaining second device encrypted patient data.

A key associated with the second device may particularly be associated with a user of the second device and/or a user profile loaded at the second device. The user profile loaded at the second device may e.g., correspond to a user logged in at the second device, a last user that was logged in at the second device, or a user profile that is associated with the second device.

The processing step may comprise storing the second device encrypted patient data on a second device memory. The second device may comprise the second device memory.

The processing step may comprise performing the encrypting of the decrypted patient data using the at least one symmetric key associated with the second device according to a symmetric encryption algorithm selected based on a type of the second device and/or an operating system of the second device. The selection may be as set out above with respect to the first device.

The processing step may comprise decrypting the second device encrypted patient data by the second device using the symmetric key associated with the second device and outputting at least a portion of the patient data. In particular, the processing step may comprise outputting at least the portion of the patient data by the second device.

The processing step may comprise deleting at least a portion of the second device encrypted patient data from the second device once said portion is stored at least for a predetermined time on the second device, for example for 30 days.

The patient data transmission step may comprise transmitting the encrypted data elements from the first device to the server system.

The patient data transmission step may further comprise transmitting the encrypted data elements from the server system to the second device.

Transmitting the first device public key set to the second device and the second device public key set to the first device may comprise
- transmitting the first device public key set from the first device to the server system,
- transmitting the second device public key set from the second device to the server system,
- transmitting the first device public key set from the server system to the second device, and
- transmitting the second device public key set from the server system to the first device.

The server system may be a cloud computing system.

The data transmission step may comprise agglomerating the encrypted data elements before transmitting the data elements from the first device to the server system.

The first device and the second device may be end-user computer devices.

The first and second device may be mobile end-user computer devices.

The first and second device may be handheld end-user computer devices.

The first device may comprise a first device key memory for storing at least one cryptographic key of the first device. The first device key memory may for example be provided by means appropriate software and/or hardware security measures.

The first device key memory may for example be a logical or a physical portion of the memory of the first device memory. The first device key memory may however also be a separate memory component.

The first device key memory may for example be implemented by the "Secure Enclave"-feature available from Apple Inc., Cupertino, CA, USA and/or by use of the "Android Jetpack" security library.

The method may comprise storing the at least one symmetric key associated with the first device in the first device key memory.

The method may comprise storing the set of shared symmetric keys in the first device key memory.

The at least one cryptographic key may be stored in an encrypted form in the first device key memory.

The first device key memory may be a privileged memory of the first device.

The privileged memory of the first device may be a trusted execution environment. For example, the privileged memory may be accessed by a secure area of the main processor. Thus, optionally advantageously, hardware backed keys may be provided.

The privileged memory of the first device may be a secure element. In other words, the privileged memory may be contained by microchip separate from a main processor and/or main memory of the first device. The secure element may for example be suitable to support Android strongbox API.

The method may comprise storing the first device private key set in the first device key memory. Thus, optionally advantageously, security of the private key set may be increased.

The second device may comprise a second device key memory for storing at least one cryptographic key of the second device. The second device key memory may for example be provided by means appropriate software and/or hardware security measures.

The second device key memory may for example be a logical or a physical portion of the memory of the first device memory. The second device key memory may however also be a separate memory component.

The second device key memory may for example be implemented by the "Secure Enclave"-feature available from Apple Inc., Cupertino, CA, USA and/or by use of the "Android Jetpack" security library.

The method may comprise storing the set of shared symmetric keys in the second device key memory.

The method may comprise storing the at least one symmetric key associated with the second device in the second device key memory.

The at least one cryptographic key may be stored in an encrypted form in the second device key memory.

The second device key memory may be a privileged memory of the second device.

The privileged memory of the second device may be a trusted execution environment. For example, the privileged memory may be accessed by a secure area of the main processor. Thus, optionally advantageously, hardware backed keys may be provided.

The privileged memory of the second device is a secure element. In other words, the privileged memory may be contained by microchip separate from a main processor and/or main memory of the first device. The secure element may for example be suitable to support Android strongbox API.

The method may comprise storing the second device private key set in the second device key memory. Thus, optionally advantageously, security of the private key set may be increased.

The second device key memory may correspond to the first device key memory, i.e., comprise same features. The second device key memory may however also be different from the first device key memory, e.g., if the first and the second device are or a different type, comprise memory components of different types and/or different operating systems.

The method may further comprise a second acquisition step comprising processing second patient data by the second device. The method may also comprise a second transport encryption step comprising splitting the second patient data into a plurality of second patient data elements, and afterwards encrypting each of the second patient data elements, thus obtaining second encrypted data elements corresponding to the respective patient data elements. Additionally, the method may comprise a second patient data transmission step comprising transmitting the second encrypted data elements to the first device. The method may further comprise a second decryption step comprising decrypting the second encrypted data elements to obtain second decrypted data elements and assemble the second decrypted data elements to obtain second decrypted patient data.

In other words, the method may comprise performing some of the above-described steps again. Optionally, these steps may be performed in "reverse sense", that is, by the opposite device, hence allowing to securely transmit a reply from the second device to the first device.

The second transport encryption step may be performed by the second device.

The second decryption step may be performed by the first device.

The second acquisition step may comprise at least one of acquiring and receiving the second patient data by the second device.

The second patient data may comprise image data.

The second patient data may comprise an indication of an identity of a patient.

The second patient data may comprise audio data.

The second patient data may comprise text data.

The second acquisition step may comprise encrypting the second patient data using the at least one symmetric key associated with the second device and thus obtaining further second device encrypted patient data.

The second acquisition step may comprise storing the further second device encrypted patient data on the second device memory, which second device memory the second device comprises.

The second acquisition step may comprise performing the encrypting of the second patient data using the at least one symmetric key associated with the second device according to a symmetric encryption algorithm selected based on a type and/or operating system of the second device.

The second acquisition step may comprise deleting at least a portion of the further second device encrypted patient data from the second device once said portion is stored at least for a predetermined time on the second device, particularly for at least 30 days.

The second transport encryption step may be performed by the second device.

The second patient data may be stored in one file. The file may for example be a container file. The transport encryption step may comprise splitting this file so as to obtain the plurality of patient data elements.

In other words, the file may be of a container file format, such as .zip-file, and suitable for containing a plurality of files. The container file may also be referred to as metafile or wrapper.

Splitting the file may comprise splitting a binary code of the file. In other words, splitting the file containing the second patient data may comprise splitting the binary code of said file.

A file size of the second patient data elements may differ at most by 10% of a size of a largest second patient data element, particularly at most by 5% of a largest second patient data element.

In some embodiments, the second patient data elements may comprise substantially a same file size.

The second transport encryption step may comprise encrypting each second patient data element by symmetric encryption using the set of shared symmetric keys.

The second transport encryption step may comprise encrypting each second patient data element by symmetric encryption using a different key from the set of shared symmetric keys.

The second transport encryption step may comprise splitting the second patient data into a plurality of n second patient data elements, wherein n <= the number of symmetric keys in the set of shared symmetric keys.

The literal n may indicate a natural number, i.e., a positive integer, indicating a quantity of the patient data elements.

The second transport encryption step may further comprise storing the second encrypted patient data elements in one file, particularly a container file containing the second encrypted patient data elements.

The second transport encryption step may comprise decrypting the further second device encrypted patient data using the at least one symmetric key associated with the second device before splitting the second patient data.

The second patient data elements may be encrypted in the second transport encryption step according to the ChaCha20Poly1305 algorithm.

The second decryption step may be performed by the first device.

The second decryption step may comprise decrypting each patient data element by symmetric encryption using the set of shared symmetric keys.

The second decryption step may comprise decrypting each of the second patient data elements by symmetric decryption using a corresponding key from the set of shared symmetric keys.

The corresponding key may be identified by trial and error.

The method may comprise a second processing step performed by the first device.

The second processing step may comprise encrypting the second decrypted patient data using at least one symmetric key associated with the first device and thus obtaining further first device encrypted patient data.

The second processing step may comprise storing the further first device encrypted patient data on the first device memory.

The second processing step may comprise performing the encrypting of the second decrypted patient data using the at least one symmetric key associated with the first device according to a symmetric encryption algorithm selected based on a type and/or operating system of the first device.

The second processing step may comprise decrypting the further first device encrypted patient data by the first device using the symmetric key associated with the first device and outputting at least a portion of the second patient data.

The processing step may comprise deleting at least a portion of the further first device encrypted patient data from the first device once said portion is stored at least for a predetermined time on the first device, for example for at least 30 days.

The second patient data transmission step may comprise transmitting the second encrypted data elements from the second device to the server system.

The patient data transmission step may further comprise transmitting the second encrypted data elements from the server system to the first device.

The second patient data transmission step may comprise agglomerating the second encrypted data elements before transmitting the second data elements from the second device to the server system.

Also disclosed are a system and a computer program product. Advantages and details discussed in the context of the method may respectively apply also in the context of the system as well as the computer program product.

In a third embodiment, a system is disclosed. The system comprises the first device and the second device. The first device is configured for performing the acquisition step comprising processing patient data. The system is configured for performing a transport encryption step. The transport encryption step comprises splitting said patient data into a plurality of the patient data elements, and afterwards encrypting each patient data element, thus obtaining encrypted data elements. The encrypted data elements correspond to the respective patient data elements. Further, the system is configured for performing the patient data transmission step comprising transmitting the encrypted data elements to the second device. The system is also configured for performing the decryption step comprising decrypting the encrypted data elements to obtain decrypted data elements and assembling the decrypted data elements to obtain decrypted patient data.

The first device may be configured for performing the transport encryption step.

The second device may be configured for performing the decryption step.

The acquisition step may comprise at least one of acquiring and receiving the patient data by the first device.

The patient data may comprise image data.

The patient data may comprise an indication of an identity of a patient.

The patient data may comprise audio data.

The acquisition step may comprise encrypting the patient data using at least one symmetric key associated with the first device and thus obtaining first device encrypted patient data.

The acquisition step may comprise storing the first device encrypted patient data on a first device memory. The first device may comprise the first device memory.

The acquisition step may comprise performing the encrypting of the patient data using the at least one symmetric key associated with the first device according to a symmetric encryption algorithm selected based on a type of the first device and/or an operating system of the first device.

The acquisition step may comprise deleting at least a portion of the first device encrypted patient data from the first device once said portion is stored at least for a predetermined time on the first device, particularly for at least 30 days.

The system may comprise the server system.

The first device may be configured for generating a first device private key set and a corresponding first device public key set. Each of these key sets may comprise at least one key.

The second device may be configured for generating a second device private key set and a corresponding second device public key set. Each of these key sets may comprise at least one key.

Each key set may comprise at least three keys.

Generating the sets of corresponding keys may comprise creating an elliptic curve for every pair of private and public keys.

The system may be configured for transmitting the first device public key set to the second device and the second device public key set to the first device.

The server system may be configured for receiving the first device public key set from the first device.

The server system may be configured for receiving the second device public key set from the second device.

The second device may be configured for receiving the first device public key set from the server system.

The first device may be configured for receiving the second device public key set from the server system.

The system may be configured for inhibiting transmission of patient data from at least one of the first device and the second device to an end-user device for which no public key set has been transmitted to the server system.

The system may be configured for performing the key agreement step. The key agreement step may comprise agreement of the set of shared symmetric keys between the first and second device based on the first and second device public key set. The set of shared symmetric keys may comprise at least one shared symmetric key.

The set of symmetric keys may be agreed upon by Diffie Hellman Key agreement.

The set of symmetric keys may be agreed upon by Elliptic curve Diffie Hellman Key agreement.

The set of symmetric keys may be agreed by Elliptic curve Diffie Hellman Key agreement.

The set of symmetric keys may comprise at least three shared symmetric keys agreed by Diffie Hellman Key agreement based on the at least three public and private keys of the first and second device public and private key sets.

The key agreement step may comprise using a salt before transmission of the shared symmetric key. The salt may be generated based on the ID of the first device and the ID of the second device.

The first device may be configured for performing the transport encryption step.

The first device may be configured for storing the patient data in the one file, particularly a container file. The transport encryption step may comprise splitting this file so as to obtain the plurality of patient data elements.

Splitting the file may comprise splitting the binary code of the file.

In some embodiments, the file size of the patient data elements may differ at most by 10% of a size a largest patient data element, particularly at most by 5% of a largest patient data element. In some embodiments, the patient data elements may comprise substantially the same file size.

The transport encryption step may comprises encrypting each patient data element by symmetric encryption using the set of shared symmetric keys.

The transport encryption step may comprise encrypting each patient data element by symmetric encryption using a different key from the set of shared symmetric keys.

The transport encryption step may comprise splitting the patient data into the plurality of n patient data elements, wherein n <= a number of symmetric keys in the set of shared symmetric keys.

The transport encryption step may further comprise storing the encrypted patient data elements in one file, particularly the container file containing the encrypted patient data elements.

The transport encryption step may comprise decrypting the first device encrypted patient data using the at least one symmetric key associated with the first device before splitting the patient data.

The first device may be configured for encrypting the patient data elements according to the ChaCha20Poly1305 algorithm.

The second device may be configured for performing the decryption step.

The decryption step may comprise decrypting each patient data element by symmetric encryption using the set of shared symmetric keys.

The decryption step may comprise decrypting each patient data element by symmetric decryption using a corresponding key from the set of shared symmetric keys.

The second device may be configured for identifying the corresponding key by trial and error.

The second device may be configured for performing the processing step.

The processing step may comprise encrypting the decrypted patient data using at least one symmetric key associated with the second device and thus obtaining the second device encrypted patient data.

The processing step may comprise storing the second device encrypted patient data on the second device memory. The second device may comprise the second device memory.

The second device may be configured for performing the encrypting of the decrypted patient data using the at least one symmetric key associated with the second device according to the symmetric encryption algorithm selected based on the type of the second device and/or the operating system of the second device.

The processing step may comprise decrypting the second device encrypted patient data by the second device using the symmetric key associated with the second device. The second device may be configured for outputting at least the portion of the patient data.

The second device may be configured for deleting at least the portion of the second device encrypted patient data from the second device once said portion is stored at least for the predetermined time on the second device, for example for 30 days.

The patient data transmission step may comprise transmitting the encrypted data elements from the first device to the server system.

The patient data transmission step may further comprise transmitting the encrypted data elements from the server system to the second device.

The server system may be configured for receiving the encrypted data elements from the first device and for transmitting the encrypted data elements to the second device.

The server system may be a cloud computing system.

The first device may be configured for agglomerating the encrypted data elements before transmitting the encrypted data elements to the server system.

The first device and the second device may be end-user computer devices.

The first and second device may be mobile end-user computer devices.

The first and second device may be handheld end-user computer devices.

The first device may comprise the first device key memory for storing the at least one cryptographic key of the first device.

The first device may be configured for storing the at least one symmetric key associated with the first device in the first device key memory.

The first device may be configured for storing the set of shared symmetric keys in the first device key memory.

The first device may be configured for storing the at least one cryptographic key in an encrypted form in the first device key memory.

The first device key memory may be the privileged memory of the first device.

The privileged memory of the first device may comprise the trusted execution environment.

The privileged memory of the first device may be the secure element.

The first device may be configured for storing the first device private key set in the first device key memory.

The second device may comprise the second device key memory for storing the at least one cryptographic key of the second device.

The second device may be configured for storing the set of shared symmetric keys in the second device key memory.

The second device may be configured for storing the at least one symmetric key associated with the second device in the second device key memory.

The second device may be configured for storing the at least one cryptographic key in an encrypted form in the second device key memory.

The second device key memory may be the privileged memory of the second device.

The privileged memory of the second device may be the trusted execution environment.

The privileged memory of the second device may be the secure element.

The second device may be configured for storing the second device private key set in the second device key memory.

Particularly with respect to the first device key memory and the second device key memory, again, reference is made to the options discussed with respect to the method.

The second device may be configured for performing the second acquisition step comprising processing second patient data. The second device may further be configured for performing the second transport encryption step comprising splitting the second patient data into the plurality of second patient data elements, and afterwards encrypting each of the second patient data elements, thus obtaining second encrypted data elements corresponding to the respective patient data elements. The system may further be configured for performing the second patient data transmission step comprising transmitting the second encrypted data elements to the first device. The first device may be configured for performing the second decryption step comprising decrypting the second encrypted data elements to obtain second decrypted data elements and assemble the second decrypted data elements to obtain second decrypted patient data.

The second acquisition step may comprise at least one of acquiring and receiving the second patient data.

The second patient data may comprise image data.

The second patient data may comprise an indication of an identity of a patient.

The second patient data may comprise audio data.

The second patient data may comprise text data.

The second device may be configured for encrypting the second patient data using the at least one symmetric key associated with the second device and thus obtaining further second device encrypted patient data in the second acquisition step.

The second device may comprise the second device memory. The second acquisition step may comprise storing the further second device encrypted patient data on the second device memory.

The second acquisition step may comprise performing the encrypting of the second patient data using the at least one symmetric key associated with the second device according to the symmetric encryption algorithm selected based on the type of the second device and/or the operating system of the second device.

The second acquisition step may comprise deleting at least a portion of the further second device encrypted patient data from the second device once said portion is stored at least for a predetermined time on the second device, particularly for at least 30 days.

The second device may be configured for storing the second patient data in one file. The file may particularly be a container file. The second transport encryption step may comprise splitting this file so as to obtain the plurality of second patient data elements.

Splitting the file may comprise splitting the binary code of the file.

The file size of the second patient data elements may differ at most by 10% of the size of the largest second patient data element, particularly at most by 5% of the largest second patient data element.

In some embodiments, the second patient data elements may comprise substantially the same file size.

The second transport encryption step may comprise encrypting each second patient data element by symmetric encryption using the set of shared symmetric keys.

The second transport encryption step may comprise encrypting each second patient data element by symmetric encryption using a different key from the set of shared symmetric keys.

The second transport encryption step may comprise splitting the second patient data into the plurality of n second patient data elements, wherein n <= the number of symmetric keys in the set of shared symmetric keys.

The second transport encryption step may further comprise storing the second encrypted patient data elements in one file, particularly the container file containing the second encrypted patient data elements.

The second transport encryption step may comprise decrypting the further second device encrypted patient data using the at least one symmetric key associated with the second device before splitting the second patient data.

The second patient data elements may be encrypted in the second transport encryption step according to the ChaCha20Poly1305 algorithm.

The second decryption step may comprise decrypting each patient data element by symmetric encryption using the set of shared symmetric keys.

The second decryption step may comprise decrypting each of the second patient data elements by symmetric decryption using the corresponding key from the set of shared symmetric keys.

The corresponding key may be identified by trial and error.

The first device may be configured for performing the second processing step.

The second processing step may comprise encrypting the second decrypted patient data using at least one symmetric key associated with the first device and thus obtaining further first device encrypted patient data.

The second processing step may comprise storing the further first device encrypted patient data on the first device memory.

The second processing step may comprise performing the encrypting of the second decrypted patient data using the at least one symmetric key associated with the first device according to the symmetric encryption algorithm selected based on the type and/or the operating system of the first device.

The second processing step may comprise decrypting the further first device encrypted patient data using the symmetric key associated with the first device. The first device may be configured for outputting at least a portion of the second patient data.

The first device may be configured for deleting at least a portion of the further first device encrypted patient data from the first device once said portion is stored at least for the predetermined time on the first device, for example for at least 30 days.

The patient data transmission step may comprise transmitting the second encrypted data elements from the second device to the server system.

The patient data transmission step may further comprise transmitting the second encrypted data elements from the server system to the first device.

The second device may be configured for agglomerating the second encrypted data elements before transmitting the second data elements to the server system.

The system may be configured for carrying out the disclosed method.

In a third embodiment, a computer program product is disclosed. The computer program product comprises instructions which, when the program is executed by the first device, cause the first device to perform the acquisition step and the transport encryption step, optionally further according to an above-discussed embodiment of the method.

The computer program product may further comprise instructions which, when the program is executed by the first device, cause the first device to generate the first device private key set and the corresponding first device public key set, wherein each set comprises at least one key, optionally further according to an above-discussed embodiment of the method.

The computer program product may further comprise instructions which, when the program is executed by the first device, cause the first device to transmit the encrypted data elements and/or the first device public key set to the server system, optionally further according to an above-discussed embodiment of the method.

The computer program product may further comprise instructions which, when the program is executed by the first device, cause the first device to store the at least one cryptographic key of the first device in the first device key memory, optionally further according to an above-discussed embodiment of the method.

In a fourth aspect, another computer program product is disclosed. The computer program product comprises instructions which, when the program is executed by the second device, cause the second device to perform the decryption step, optionally further according to an above-discussed embodiment of the method.

The computer program product may further comprise instructions which, when the program is executed by the second device, cause the second device to generate the second device private key set and the corresponding second device public key set, wherein each set may comprise at least one key, optionally further according to an above-discussed embodiment of the method.

The computer program product may further comprise instructions which, when the program is executed by the second device, cause the second device to receive the encrypted data elements and/or the first device public key set from the server system, optionally further according to an above-discussed embodiment of the method.

The computer program product may further comprise instructions which, when the program is executed by the second device, cause the second device to perform the processing step, optionally further according to an above-discussed embodiment of the method.

The computer program product may further comprise instructions which, when the program is executed by the second device, cause the second device to transmit the second device public key set to the server system, optionally further according to an above-discussed embodiment of the method.

The computer program product further may comprise instructions which, when the program is executed by the second device, cause the second device to store the at least one cryptographic key of the second device in the second device key memory, optionally further according to an above-discussed embodiment of the method.

The following embodiments also form part of the invention.

### Method embodiments

Below, embodiments of a method will be discussed. The method embodiments are abbreviated by the letter "M" followed by a number. Whenever reference is herein made to the "method embodiments", these embodiments are meant.
M1. A method, comprising
   - an acquisition step comprising processing patient data (17) by a first device (10),
   - a transport encryption step comprising splitting said patient data (17) into a plurality of patient data elements, and afterwards encrypting each patient data element, thus obtaining encrypted data elements (64) corresponding to the respective patient data elements,
   - a patient data transmission step comprising transmitting the encrypted data elements (64) to a second device (30),
   - a decryption step comprising decrypting the encrypted data elements (64) to obtain decrypted data elements and assemble the decrypted data elements to obtain decrypted patient data.
M2. The method according to M1, wherein the transport encryption step is performed by the first device.
M3. The method according to any of the preceding embodiments, wherein the decryption step is performed by the second device.
M4. The method according to any of the preceding embodiments, wherein the acquisition step comprises at least one of acquiring and receiving the patient data (17) by the first device (10).
M5. The method according to any of the preceding embodiments, wherein the patient data (17) comprise image data.
M6. The method according to any of the preceding embodiments, wherein the patient data (17) comprise an indication of an identity of a patient.
M7. The method according to any of the preceding embodiments, wherein the patient data (17) comprise audio data.
M8. The method according to any of the preceding embodiments, wherein the acquisition step comprises encrypting the patient data (17) using at least one symmetric key associated with the first device (26) and thus obtaining first device encrypted patient data (18).
M9. The method according to the preceding embodiment, wherein the acquisition step comprises storing the first device encrypted patient data (18) on a first device memory (12), which first device memory (12) the first device (10) comprises.
M10. The method according to any of the preceding embodiments with the features of M9, wherein the acquisition step comprises performing the encrypting of the patient data (17) using the at least one symmetric key associated with the first device (26) according to a symmetric encryption algorithm selected based on a type of the first device (30) and/or an operating system of the first device (30).
M11. The method according to any of the preceding 3 embodiments, wherein the acquisition step comprises deleting at least a portion of the first device encrypted patient data (18) from the first device (10) once said portion is stored at least for a predetermined time on the first device, particularly for at least 30 days.
M12. The method according to any of the preceding embodiments, wherein the method comprises an initialisation step.
M13. The method according to the preceding embodiment, wherein the initialisation step comprises the first device (10) generating a first device private key set (24) and a corresponding first device public key set (23), wherein each set comprises at least one key.
M14. The method according to any of the preceding embodiments with the features of M12, wherein the initialisation step further comprises the second device (30) generating a second device private key set (44) and a corresponding second device public key set (43), wherein each set comprises at least one key.
M15. The method according to any of the two preceding embodiments, wherein each key set comprises at least three keys.
M16. The method according to any of the preceding three embodiments, wherein generating the sets of corresponding keys comprises creating an elliptic curve for every pair of private and public keys.
M17. The method according to any of the preceding embodiments with the features of M13 and M14, wherein the method comprises transmitting the first device public key set (23) to the second device (30) and the second device public key set (43) to the first device (10).
M18. The method according to the preceding embodiment, wherein transmitting the first device public key set (23) to the second device (30) and the second device public key set (43) to the first device (10) comprises
   - transmitting the first device public key set (23) from the first device (10) to a server system (80),
   - transmitting the second device public key set (43) from the second device (30) to the server system (80),
   - transmitting the first device public key set (23) from the server system (80) to the second device (30), and
   - transmitting the second device public key set (43) from the server system (80) to the first device (10).
M19. The method according to the preceding embodiment, wherein the method comprises inhibiting transmission of patient data to an end-user device for which no public key set has been transmitted to the server system (80).
M20. The method according to any of the preceding embodiments with the features of M13 and M14, particularly with the features of M17, wherein the method comprises a key agreement step, wherein the key agreement step comprises agreement of a set of shared symmetric keys (60) between the first and second device (10, 30) based on the first and second device public key set (23, 43), wherein the set of shared symmetric keys (60) comprises at least one shared symmetric key.
M21. The method according to the preceding embodiment, wherein the set of symmetric keys is agreed upon by Diffie Hellman Key agreement.
M22. The method according to any of the preceding embodiments with the features of M20 and M16, wherein the set of symmetric keys is agreed upon by Elliptic curve Diffie Hellman Key agreement.
M23. The method according to any of the preceding embodiments with the features of M20 and M15, wherein the set of symmetric keys (60) comprises at least three shared symmetric keys agreed by Diffie Hellman Key agreement based on the at least three public and private keys of the first and second device public and private key sets (23, 24, 43, 44).
M24. The method according to any of the preceding embodiments with the features of M21, wherein the key agreement step comprises using a salt before transmission of the shared symmetric key, wherein the salt is generated based on an ID of the first device (10) and an ID of the second device (30).
M25. The method according to any of the preceding embodiments, wherein the transport encryption step is performed by the first device (10).
M26. The method according to the preceding embodiment, wherein the patient data (17) are stored in one file, particularly a container file, and wherein the transport encryption step comprises splitting this file so as to obtain the plurality of patient data elements.
M27. The method according to the preceding embodiment, wherein splitting the file comprises splitting a binary code of the file.
M28. The method according to any of the preceding embodiments, particularly any of the two preceding embodiments, wherein a file size of the patient data elements differs at most by 10% of a size a largest patient data element, particularly at most by 5% of a largest patient data element.
M29. The method according to any of the preceding embodiments, particularly with the features of M20, wherein the transport encryption step comprises encrypting each patient data element by symmetric encryption using the set of shared symmetric keys (60).
M30. The method according to the preceding embodiment, particularly with the features of M23, wherein the transport encryption step comprises encrypting each patient data element by symmetric encryption using a different key from the set of shared symmetric keys (60).
M31. The method according to any of the preceding embodiments with the features of M29, wherein the transport encryption step comprises splitting the patient data (17) into a plurality of n patient data elements, wherein n <= a number of symmetric keys in the set of shared symmetric keys (60).
M32. The method according to any of the preceding embodiments, wherein the transport encryption step further comprises storing the encrypted patient data elements (64) in one file, particularly a container file containing the encrypted patient data elements (64).
M33. The method according to any of the preceding embodiments with the features of M8, wherein the transport encryption step comprises decrypting the first device encrypted patient data (18) using the at least one symmetric key associated with the first device (26) before splitting the patient data (17).
M34. The method according to any of the preceding embodiments, wherein the patient data elements are encrypted in the transport encryption step according to the ChaCha20Poly1305 algorithm.
M35. The method according to any of the preceding embodiments with the features of M29, wherein the decryption step is performed by the second device (30).
M36. The method according to any of the preceding embodiments with the features of M29, wherein the decryption step comprises decrypting each patient data element by symmetric encryption using the set of shared symmetric keys (60).
M37. The method according to any of the preceding embodiments with the features of M23, wherein the decryption step comprises decrypting each patient data element by symmetric decryption using a corresponding key from the set of shared symmetric keys (60).
M38. The method according to the preceding embodiment, wherein the corresponding key is identified by trial and error.
M39. The method according to any of the preceding embodiments, wherein the method comprises a processing step performed by the second device.
M40. The method according to the preceding embodiment, wherein the processing step comprises encrypting the decrypted patient data (37) using at least one symmetric key associated with the second device (46) and thus obtaining second device encrypted patient data (38).
M41. The method according to the preceding embodiment, wherein the processing step comprises storing the second device encrypted patient data (38) on a second device memory (32), which second device memory (32) the second device (30) comprises.
M42. The method according to any of the preceding embodiments with the features of M40, wherein the processing step comprises performing the encrypting of the decrypted patient data (37) using the at least one symmetric key associated with the second device (46) according to a symmetric encryption algorithm selected based on a type of the second device (30) and/or an operating system of the second device (30).
M43. The method according to any of the preceding embodiments with the features of M39, wherein the processing step comprises decrypting the second device encrypted patient data (38) by the second device using the symmetric key associated with the second device (46) and outputting at least a portion of the patient data (37).
M44. The method according to any of the preceding embodiments with the features of M39, wherein the processing step comprises deleting at least a portion of the second device encrypted patient data (38) from the second device (30) once said portion is stored at least for a predetermined time on the second device, for example for 30 days.
M45. The method according to any of the preceding embodiments, wherein the patient data transmission step comprises transmitting the encrypted data elements (64) from the first device (10) to the server system.
M46. The method according to the preceding embodiment, wherein the patient data transmission step further comprises transmitting the encrypted data elements (64) from the server system to the second device (30).
M47. The method according to any of the preceding embodiments with the features of M17, wherein transmitting the first device public key set (23) to the second device (30) and the second device public key set (43) to the first device (10) comprises
   - transmitting the first device public key set (23) from the first device (10) to the server system,
   - transmitting the second device public key set (43) from the second device (30) to the server system,
   - transmitting the first device public key set (23) from the server system to the second device (30),
   - transmitting the second device public key set (43) from the server system to the first device (10).
M48. The method according to any of the preceding embodiments with the features of at least one of M45 and M47, wherein the server system is a cloud computing system.
M49. The method according to any of the preceding embodiments with the features of M45, wherein the data transmission step comprises agglomerating the encrypted data elements (64) before transmitting the data elements from the first device (10) to the server system.
M50. The method according to any of the preceding embodiments, wherein the first device (10) and the second device (30) are end-user computer devices.
M51. The method according the preceding embodiment, wherein the first and second device (10, 30) are mobile end-user computer devices.
M52. The method according to any of the two preceding embodiments, wherein the first and second device (10, 30) are handheld end-user computer devices.
M53. The method according to any of the preceding embodiments, wherein the first device comprises a first device key memory (14) for storing at least one cryptographic key of the first device.
M54. The method according to any of the preceding embodiments with the features of M53 and M8, wherein the method comprises storing the at least one symmetric key associated with the first device (26) in the first device key memory (14).
M55. The method according to any of the preceding embodiments with the features of M53 and M20, wherein the method comprises storing the set of shared symmetric keys (60) in the first device key memory (14).
M56. The method according to any of the preceding embodiments with the features of M53, wherein the at least one cryptographic key is stored in an encrypted form in the first device key memory (14).
M57. The method according to any of the preceding embodiments with the features of M53, wherein the first device key memory (14) is a privileged memory of the first device.
M58. The method according to the preceding embodiment, wherein the privileged memory of the first device is a trusted execution environment.
M59. The method according to any of the two preceding embodiments, wherein the privileged memory of the first device is a secure element.
M60. The method according to any of the preceding embodiments with the features of M13 and M53, wherein the method comprises storing the first device private key set (24) in the first device key memory (14).
M61. The method according to any of the preceding embodiments, wherein the second device comprises a second device key memory (34) for storing at least one cryptographic key of the second device.
M62. The method according to any of the preceding embodiments with the features of M61 and M20, wherein the method comprises storing the set of shared symmetric keys (60) in the second device key memory (34).
M63. The method according to any of the preceding embodiments with the features of M61 and M41, wherein the method comprises storing the at least one symmetric key associated with the second device (46) in the second device key memory (34).
M64. The method according to any of the preceding embodiments with the features of M61, wherein the at least one cryptographic key is stored in an encrypted form in the second device key memory (34).
M65. The method according to any of the preceding embodiments with the features of M61, wherein the second device key memory (34) is a privileged memory of the second device.
M66. The method according to the preceding embodiment, wherein the privileged memory of the second device is a trusted execution environment.
M67. The method according to any of the two preceding embodiments, wherein the privileged memory of the second device is a secure element.
M68. The method according to any of the preceding embodiments with the features of M14 and M61, wherein the method comprises storing the second device private key set (24) in the second device key memory (14).
M69. The method according to any of the preceding embodiments, wherein the method further comprises
   - a second acquisition step comprising processing second patient data (97) by the second device (30),
   - a second transport encryption step comprising splitting the second patient data (97) into a plurality of second patient data elements, and afterwards encrypting each of the second patient data elements, thus obtaining second encrypted data elements (104) corresponding to the respective patient data elements,
   - a second patient data transmission step comprising transmitting the second encrypted data elements (104) to the first device (30),
   - a second decryption step comprising decrypting the second encrypted data elements (104) to obtain second decrypted data elements and assemble the second decrypted data elements to obtain second decrypted patient data (117).
M70. The method according to M69, wherein the second transport encryption step is performed by the second device (30).
M71. The method according to any of the preceding embodiments with the features of M69, wherein the second decryption step is performed by the first device (10).
M72. The method according to any of the preceding embodiments with the features of M69, wherein the second acquisition step comprises at least one of acquiring and receiving the second patient data (97) by the second device (30).
M73. The method according to any of the preceding embodiments with the features of M69, wherein the second patient data (97) comprise image data.
M74. The method according to any of the preceding embodiments with the features of M69, wherein the second patient data (97) comprise an indication of an identity of a patient.
M75. The method according to any of the preceding embodiments with the features of M69, wherein the second patient data (97) comprise audio data.
M76. The method according to any of the preceding embodiments with the features of M69, wherein the second patient data (97) comprise text data.
M77. The method according to any of the preceding embodiments with the features of M69, wherein the second acquisition step comprises encrypting the second patient data (97) using the at least one symmetric key associated with the second device (46) and thus obtaining further second device encrypted patient data (38).
M78. The method according to the preceding embodiment, wherein the second acquisition step comprises storing the further second device encrypted patient data (38) on the second device memory (32), which second device memory (32) the second device (30) comprises.
M79. The method according to any of the preceding embodiments with the features of M78, wherein the second acquisition step comprises performing the encrypting of the second patient data (97) using the at least one symmetric key associated with the second device (46) according to a symmetric encryption algorithm selected based on a type and/or operating system of the second device (30).
M80. The method according to any of the preceding 2 embodiments, wherein the second acquisition step comprises deleting at least a portion of the further second device encrypted patient data (38) from the second device (10) once said portion is stored at least for a predetermined time on the second device, particularly for at least 30 days.
M81. The method according to any of the preceding embodiments with the features of M69, wherein the second transport encryption step is performed by the second device (30).
M82. The method according to the preceding embodiment, wherein the second patient data (17) are stored in one file, particularly a container file, and wherein the second transport encryption step comprises splitting this file so as to obtain the plurality of second patient data elements.
M83. The method according to the preceding embodiment, wherein splitting the file comprises splitting a binary code of the file.
M84. The method according to any of the embodiments, particularly any of the two preceding embodiments, wherein a file size of the second patient data elements differs at most by 10% of a size a largest second patient data element, particularly at most by 5% of a largest second patient data element.
M85. The method according to any of the preceding embodiments with the features of M69, particularly with the features of M20, wherein the second transport encryption step comprises encrypting each second patient data element by symmetric encryption using the set of shared symmetric keys (60).
M86. The method according to the preceding embodiment, particularly with the features of M23, wherein the second transport encryption step comprises encrypting each second patient data element by symmetric encryption using a different key from the set of shared symmetric keys (60).
M87. The method according to any of the preceding embodiments with the features of M85, wherein the second transport encryption step comprises splitting the second patient data (97) into a plurality of n second patient data elements, wherein n <= the number of symmetric keys in the set of shared symmetric keys (60).
M88. The method according to any of the preceding embodiments, wherein the second transport encryption step further comprises storing the second encrypted patient data elements (104) in one file, particularly a container file containing the second encrypted patient data elements (104).
M89. The method according to any of the preceding embodiments with the features of M77, wherein the second transport encryption step comprises decrypting the further second device encrypted patient data (38) using the at least one symmetric key associated with the second device (46) before splitting the second patient data (97).
M90. The method according to any of the preceding embodiments with the features of M69, wherein the second patient data elements are encrypted in the second transport encryption step according to the ChaCha20Poly1305 algorithm.
M91. The method according to any of the preceding embodiments with the features of M81, wherein the second decryption step is performed by the first device (10).
M92. The method according to any of the preceding embodiments with the features of M85, wherein the second decryption step comprises decrypting each patient data element by symmetric encryption using the set of shared symmetric keys (60).
M93. The method according to any of the preceding embodiments with the features of M23, wherein the second decryption step comprises decrypting each of the second patient data elements by symmetric decryption using a corresponding key from the set of shared symmetric keys (60).
M94. The method according to the preceding embodiment, wherein the corresponding key is identified by trial and error.
M95. The method according to any of the preceding embodiments with the features of M69, wherein the method comprises a second processing step performed by the first device (10).
M96. The method according to the preceding embodiment, wherein the second processing step comprises encrypting the second decrypted patient data (117) using at least one symmetric key associated with the first device (26) and thus obtaining further first device encrypted patient data (18).
M97. The method according to the preceding embodiment, wherein the second processing step comprises storing the further first device encrypted patient data (18) on the first device memory (12).
M98. The method according to any of the preceding embodiments with the features of M96, wherein the second processing step comprises performing the encrypting of the second decrypted patient data (117) using the at least one symmetric key associated with the first device (26) according to a symmetric encryption algorithm selected based on a type and/or operating system of the first device (10).
M99. The method according to any of the preceding embodiments with the features of M95, wherein the second processing step comprises decrypting the further first device encrypted patient data (18) by the first device (10) using the symmetric key associated with the first device (26) and outputting at least a portion of the second patient data (97).
M100. The method according to any of the preceding embodiments with the features of M95, wherein the processing step comprises deleting at least a portion of the further first device encrypted patient data (18) from the first device (10) once said portion is stored at least for a predetermined time on the first device (10), for example for at least 30 days.
M101. The method according to any of the preceding embodiments with the features of M69, wherein the second patient data transmission step comprises transmitting the second encrypted data elements (104) from the second device (30) to the server system (80).
M102. The method according to the preceding embodiment, wherein the patient data transmission step further comprises transmitting the second encrypted data elements (104) from the server system (80) to the first device (10).
M103. The method according to any of the preceding embodiments with the features of M101, wherein the second patient data transmission step comprises agglomerating the second encrypted data elements (10) before transmitting the second data elements from the second device (30) to the server system (80).

### System embodiments

Below, embodiments of a system will be discussed. The system embodiments are abbreviated by the letter "S" followed by a number. Whenever reference is herein made to the "system embodiments", these embodiments are meant.
S1. A system, comprising a first device (10) and a second device (30),
   wherein the first device is configured for performing an acquisition step comprising processing patient data (17), and
   wherein the system is configured for performing

   - a transport encryption step comprising splitting said patient data (17) into a plurality of patient data elements, and afterwards encrypting each patient data element, thus obtaining encrypted data elements (64) corresponding to the respective patient data elements,
   - a patient data transmission step comprising transmitting the encrypted data elements (64) to the second device (30), and
   - a decryption step comprising decrypting the encrypted data elements (64) to obtain decrypted data elements and assembling the decrypted data elements to obtain decrypted patient data.
S2. The system according to S1, wherein the first device (10) is configured for performing the transport encryption step.
S3. The system according to any of the preceding system embodiments, wherein the second device (30) is configured for performing the decryption step.
S4. The system according to any of the preceding system embodiments, wherein the acquisition step comprises at least one of acquiring and receiving the patient data (17) by the first device (10).
S5. The system according to any of the preceding system embodiments, wherein the patient data (17) comprise image data.
S6. The system according to any of the preceding system embodiments, wherein the patient data (17) comprise an indication of an identity of a patient.
S7. The system according to any of the preceding system embodiments, wherein the patient data (17) comprise audio data.
S8. The system according to any of the preceding system embodiments, wherein the acquisition step comprises encrypting the patient data (17) using at least one symmetric key associated with the first device (26) and thus obtaining first device encrypted patient data (18).
S9. The system according to the preceding embodiment, wherein the acquisition step comprises storing the first device encrypted patient data (18) on a first device memory (12),
   wherein the first device (10) comprises the first device memory (12).
S10. The system according to any of the preceding system embodiments with the features of S9, wherein the acquisition step comprises performing the encrypting of the patient data (17) using the at least one symmetric key associated with the first device (26) according to a symmetric encryption algorithm selected based on a type of the first device (30) and/or an operating system of the first device (30).
S11. The system according to any of the preceding 3 embodiments, wherein the acquisition step comprises deleting at least a portion of the first device encrypted patient data (18) from the first device (10) once said portion is stored at least for a predetermined time on the first device, particularly for at least 30 days.
S12. The system according to any of the preceding system embodiments, wherein the system comprises a server system (80).
S13. The system according to any of the preceding system embodiments, wherein the first device (10) is configured for generating a first device private key set (24) and a corresponding first device public key set (23), wherein each of these key sets comprises at least one key.
S14. The system according to any of the preceding system embodiments, wherein the second device (30) is configured for generating a second device private key set (44) and a corresponding second device public key set (43), wherein each of these key sets comprises at least one key.
S15. The system according to any of the two preceding embodiments, wherein each key set comprises at least three keys.
S16. The system according to any of the preceding three embodiments, wherein generating the sets of corresponding keys comprises creating an elliptic curve for every pair of private and public keys.
S17. The system according to any of the preceding system embodiments with the features of S13 and S14, wherein the system is configured for transmitting the first device public key set (23) to the second device (30) and the second device public key set (43) to the first device (10).
S18. The system according to the preceding embodiment and with the features of S12, wherein
   - the server system (80) is configured for receiving the first device public key set (23) from the first device (10),
   - the server system (80) is configured for receiving the second device public key set (43) from the second device (30),
   - the second device (30) is configured for receiving the first device public key set (23) from the server system (80), and
   - the first device (10) is configured for receiving the second device public key set (43) from the server system (80).
S19. The system according to the preceding embodiment, wherein the system is configured for inhibiting transmission of patient data from at least one of the first device (10) and the second device (20) to an end-user device for which no public key set has been transmitted to the server system (80).
S20. The system according to any of the preceding embodiments with the features of S13 and S14, particularly with the features of S17,
   wherein the system is configured for performing a key agreement step, wherein the key agreement step comprises agreement of a set of shared symmetric keys (60) between the first and second device (10, 30) based on the first and second device public key set (23, 43),
   wherein the set of shared symmetric keys (60) comprises at least one shared symmetric key.
S21. The system according to the preceding embodiment, wherein the set of symmetric keys is agreed upon by Diffie Hellman Key agreement.
S22. The system according to any of the preceding system embodiments with the features of S20 and S16, wherein the set of symmetric keys is agreed upon by Elliptic curve Diffie Hellman Key agreement.
S23. The system according to any of the preceding system embodiments with the features of S16 and S20, wherein the set of symmetric keys is agreed by Elliptic curve Diffie Hellman Key agreement.
S24. The system according to any of the preceding system embodiments with the features of S15 and S20, wherein the set of symmetric keys (60) comprises at least three shared symmetric keys agreed by Diffie Hellman Key agreement based on the at least three public and private keys of the first and second device public and private key sets (23, 24, 43, 44).
S25. The system according to any of the preceding system embodiments with the features of S21,
   wherein the key agreement step comprises using a salt before transmission of the shared symmetric key,
   wherein the salt is generated based on an ID of the first device (10) and an ID of the second device (30).
S26. The system according to any of the preceding system embodiments, wherein the first device (10) is configured for performing the transport encryption step.
S27. The system according to the preceding embodiment,
   wherein the first device (10) is configured for storing the patient data (17) in one file, particularly a container file, and
   wherein the transport encryption step comprises splitting this file so as to obtain the plurality of patient data elements.
S28. The system according to the preceding embodiment, wherein splitting the file comprises splitting a binary code of the file.
S29. The system according to any of the preceding system embodiments, particularly any of the two preceding embodiments, wherein a file size of the patient data elements differs at most by 10% of a size a largest patient data element, particularly at most by 5% of a largest patient data element.
S30. The system according to any of the preceding system embodiments, particularly with the features of S20, wherein the transport encryption step comprises encrypting each patient data element by symmetric encryption using the set of shared symmetric keys (60).
S31. The system according to the preceding embodiment, particularly with the features of S24, wherein the transport encryption step comprises encrypting each patient data element by symmetric encryption using a different key from the set of shared symmetric keys (60).
S32. The system according to any of the preceding system embodiments with the features of S30, wherein the transport encryption step comprises splitting the patient data (17) into a plurality of n patient data elements, wherein n <= a number of symmetric keys in the set of shared symmetric keys (60).
S33. The system according to any of the preceding embodiments, wherein the transport encryption step further comprises storing the encrypted patient data elements (64) in one file, particularly a container file containing the encrypted patient data elements (64).
S34. The system according to any of the preceding system embodiments with the features of S8, wherein the transport encryption step comprises decrypting the first device encrypted patient data (18) using the at least one symmetric key associated with the first device (26) before splitting the patient data (17).
S35. The system according to any of the preceding system embodiments, wherein the first device is configured for encrypting the patient data elements according to the ChaCha20Poly1305 algorithm.
S36. The system according to any of the preceding system embodiments with the features of S30, wherein the second device (30) is configured for performing the decryption step.
S37. The system according to any of the preceding embodiments with the features of S30, wherein the decryption step comprises decrypting each patient data element by symmetric encryption using the set of shared symmetric keys (60).
S38. The system according to any of the preceding system embodiments with the features of S24, wherein the decryption step comprises decrypting each patient data element by symmetric decryption using a corresponding key from the set of shared symmetric keys (60).
S39. The system according to the preceding embodiment, wherein the second device is configured for identifying the corresponding key by trial and error.
S40. The system according to any of the preceding system embodiments, wherein the second device (30) is configured for performing a processing step.
S41. The system according to the preceding embodiment, wherein the processing step comprises encrypting the decrypted patient data (37) using at least one symmetric key associated with the second device (46) and thus obtaining second device encrypted patient data (38).
S42. The system according to the preceding embodiment, wherein the processing step comprises storing the second device encrypted patient data (38) on a second device memory (32),
   wherein the second device (30) comprises the second device memory (32).
S43. The system according to any of the preceding embodiments with the features of S41, wherein the second device (30) is configured for performing the encrypting of the decrypted patient data (37) using the at least one symmetric key associated with the second device (46) according to a symmetric encryption algorithm selected based on a type of the second device (30) and/or an operating system of the second device (30).
S44. The system according to any of the preceding embodiments with the features of S40, wherein the processing step comprises decrypting the second device encrypted patient data (38) by the second device using the symmetric key associated with the second device (46),
wherein the second device (30) is configured for outputting at least a portion of the patient data (37).
S45. The system according to any of the preceding embodiments with the features of S40, wherein the second device (30) is configured for deleting at least a portion of the second device encrypted patient data (38) from the second device (30) once said portion is stored at least for a predetermined time on the second device, for example for 30 days.
S46. The system according to any of the preceding system embodiments with the features of S12, wherein the patient data transmission step comprises transmitting the encrypted data elements (64) from the first device (10) to the server system (80).
S47. The system according to the preceding embodiment, wherein the patient data transmission step further comprises transmitting the encrypted data elements (64) from the server system to the second device (30).
S48. The system according to the preceding embodiment, wherein the server system (80) is configured for receiving the encrypted data elements (64) from the first device (10) and for transmitting the encrypted data elements (64) to the second device (30).
S49. The system according to any of the preceding system embodiments with the features of S12, wherein the server system (80) is a cloud computing system.
S50. The system according to any of the preceding embodiments with the features of S46, wherein the first device is configured for agglomerating the encrypted data elements (64) before transmitting the encrypted data elements (64) to the server system.
S51. The system according to any of the preceding system embodiments, wherein the first device (10) and the second device (30) are end-user computer devices.
S52. The system according the preceding embodiment, wherein the first and second device (10, 30) are mobile end-user computer devices.
S53. The system according to any of the two preceding embodiments, wherein the first and second device (10, 30) are handheld end-user computer devices.
S54. The system according to any of the preceding system embodiments, wherein the first device comprises a first device key memory (14) for storing at least one cryptographic key of the first device.
S55. The system according to any of the preceding system embodiments with the features of S54 and S8, wherein the first device (10) is configured for storing the at least one symmetric key associated with the first device (26) in the first device key memory (14).
S56. The system according to any of the preceding system embodiments with the features of S54 and S20, wherein the first device (10) is configured for storing the set of shared symmetric keys (60) in the first device key memory (14).
S57. The system according to any of the preceding system embodiments with the features of S54, wherein the first device (10) is configured for storing the at least one cryptographic key in an encrypted form in the first device key memory (14).
S58. The system according to any of the preceding system embodiments with the features of S54, wherein the first device key memory (14) is a privileged memory of the first device.
S59. The system according to the preceding embodiment, wherein the privileged memory of the first device comprises a trusted execution environment.
S60. The system according to any of the two preceding embodiments, wherein the privileged memory of the first device is a secure element.
S61. The system according to any of the preceding system embodiments with the features of S13 and S54, wherein the first device (10) is configured for storing the first device private key set (24) in the first device key memory (14).
S62. The system according to any of the preceding system embodiments, wherein the second device comprises a second device key memory (34) for storing at least one cryptographic key of the second device.
S63. The system according to any of the preceding system embodiments with the features of S62 and S20, wherein the second device (30) is configured for storing the set of shared symmetric keys (60) in the second device key memory (34).
S64. The system according to any of the preceding system embodiments with the features of S62 and S42, wherein the second device (30) is configured for storing the at least one symmetric key associated with the second device (46) in the second device key memory (34).
S65. The system according to any of the preceding system embodiments with the features of S62, wherein the second device (30) is configured for storing the at least one cryptographic key in an encrypted form in the second device key memory (34).
S66. The system according to any of the preceding system embodiments with the features of S62, wherein the second device key memory (34) is a privileged memory of the second device.
S67. The system according to the preceding embodiment, wherein the privileged memory of the second device is a trusted execution environment.
S68. The system according to any of the two preceding embodiments, wherein the privileged memory of the second device is a secure element.
S69. The system according to any of the preceding system embodiments with the features of S14 and S62, wherein the second device (30) is configured for storing the second device private key set (24) in the second device key memory (14).
S70. The system according to any of the preceding system embodiments, wherein
   - the second device (30) is configured for performing a second acquisition step comprising processing second patient data (97),
   - the second device (30) is further configured for performing a second transport encryption step comprising splitting the second patient data (97) into a plurality of second patient data elements, and afterwards encrypting each of the second patient data elements, thus obtaining second encrypted data elements (104) corresponding to the respective patient data elements,
   - the system is further configured for performing a second patient data transmission step comprising transmitting the second encrypted data elements (104) to the first device (30),
   - the first device (10) is configured for performing a second decryption step comprising decrypting the second encrypted data elements (104) to obtain second decrypted data elements and assemble the second decrypted data elements to obtain second decrypted patient data (117).
S71. The system according to any of the preceding system embodiments with the features of S70, wherein the second acquisition step comprises at least one of acquiring and receiving the second patient data (97).
S72. The system according to any of the preceding system embodiments with the features of S70, wherein the second patient data (97) comprise image data.
S73. The system according to any of the preceding system embodiments with the features of S70, wherein the second patient data (97) comprise an indication of an identity of a patient.
S74. The system according to any of the preceding system embodiments with the features of S70, wherein the second patient data (97) comprise audio data.
S75. The system according to any of the preceding system embodiments with the features of S70, wherein the second patient data (97) comprise text data.
S76. The system according to any of the preceding system embodiments with the features of S70, wherein the second device (30) is configured for encrypting the second patient data (97) using the at least one symmetric key associated with the second device (46) and thus obtaining further second device encrypted patient data (38) in the second acquisition step.
S77. The method according to the preceding embodiment, wherein the second device (30) comprises second device memory (32), and
   wherein the second acquisition step comprises storing the further second device encrypted patient data (38) on the second device memory (32).
S78. The system according to any of the preceding embodiments with the features of S77, wherein the second acquisition step comprises performing the encrypting of the second patient data (97) using the at least one symmetric key associated with the second device (46) according to a symmetric encryption algorithm selected based on a type of the second device (30) and/or an operating system of the second device (30).
S79. The system according to any of the two preceding embodiments, wherein the second acquisition step comprises deleting at least a portion of the further second device encrypted patient data (38) from the second device (10) once said portion is stored at least for a predetermined time on the second device, particularly for at least 30 days.
S80. The system according to any of the preceding embodiments with the features of S70, wherein the second device is configured for storing the second patient data (17) in one file, particularly a container file, and
   wherein the second transport encryption step comprises splitting this file so as to obtain the plurality of second patient data elements.
S81. The system according to the preceding embodiment, wherein splitting the file comprises splitting a binary code of the file.
S82. The system according to any of the preceding system embodiments with the features of S70, particularly any of the two preceding embodiments, wherein a file size of the second patient data elements differs at most by 10% of a size a largest second patient data element, particularly at most by 5% of a largest second patient data element.
S83. The system according to any of the preceding system embodiments with the features of S70, particularly with the features of S20, wherein the second transport encryption step comprises encrypting each second patient data element by symmetric encryption using the set of shared symmetric keys (60).
S84. The system according to the preceding embodiment, particularly with the features of S24, wherein the second transport encryption step comprises encrypting each second patient data element by symmetric encryption using a different key from the set of shared symmetric keys (60).
S85. The system according to any of the preceding embodiments with the features of S83, wherein the second transport encryption step comprises splitting the second patient data (97) into a plurality of n second patient data elements, wherein n <= the number of symmetric keys in the set of shared symmetric keys (60).
S86. The system according to any of the preceding system embodiments, wherein the second transport encryption step further comprises storing the second encrypted patient data elements (104) in one file, particularly a container file containing the second encrypted patient data elements (104).
S87. The system according to any of the preceding system embodiments with the features of S76, wherein the second transport encryption step comprises decrypting the further second device encrypted patient data (38) using the at least one symmetric key associated with the second device (46) before splitting the second patient data (97).
S88. The system according to any of the preceding system embodiments with the features of S70, wherein the second patient data elements are encrypted in the second transport encryption step according to the ChaCha20Poly1305 algorithm.
S89. The system according to any of the preceding embodiments with the features of S83, wherein the second decryption step comprises decrypting each patient data element by symmetric encryption using the set of shared symmetric keys (60).
S90. The system according to any of the preceding embodiments with the features of S24, wherein the second decryption step comprises decrypting each of the second patient data elements by symmetric decryption using a corresponding key from the set of shared symmetric keys (60).
S91. The system according to the preceding embodiment, wherein the corresponding key is identified by trial and error.
S92. The system according to any of the preceding system embodiments with the features of S70, wherein the first device (10) is configured for performing a second processing step.
S93. The system according to the preceding embodiment, wherein the second processing step comprises encrypting the second decrypted patient data (117) using at least one symmetric key associated with the first device (26) and thus obtaining further first device encrypted patient data (18).
S94. The system according to the preceding embodiment, wherein the second processing step comprises storing the further first device encrypted patient data (18) on the first device memory (12).
S95. The system according to any of the preceding embodiments with the features of S93, wherein the second processing step comprises performing the encrypting of the second decrypted patient data (117) using the at least one symmetric key associated with the first device (26) according to a symmetric encryption algorithm selected based on a type and/or operating system of the first device (10).
S96. The method according to any of the preceding embodiments with the features of S92, wherein the second processing step comprises decrypting the further first device encrypted patient data (18) using the symmetric key associated with the first device (26), and
   wherein the first device (10) is configured for outputting at least a portion of the second patient data (97).
S97. The system according to any of the preceding embodiments with the features of S92, wherein the first device (10) is configured for deleting at least a portion of the further first device encrypted patient data (18) from the first device (10) once said portion is stored at least for a predetermined time on the first device (10), for example for at least 30 days.
S98. The system according to any of the preceding embodiments with the features of S70, the patient data transmission step comprises transmitting the second encrypted data elements (104) from the second device (30) to the server system (80).
S99. The system according to the preceding embodiment, wherein the patient data transmission step further comprises transmitting the second encrypted data elements (104) from the server system (80) to the first device (10).
S100. The system according to any of the preceding system embodiments with the features of S98, wherein the second device (30) is configured for agglomerating the second encrypted data elements (10) before transmitting the second data elements to the server system (80).
S101. The system according to any of the preceding system embodiments, wherein the system is configured for carrying out the method according to any of the method embodiments.

### Computer program product embodiments

Below, embodiments of a computer program product will be discussed. These embodiments are abbreviated by the letter "C" followed by a number. Whenever reference is herein made to the "computer program product embodiments", these embodiments are meant.
C1. A computer program product comprising instructions which, when the program is executed by the first device, cause the first device to perform the acquisition step and the transport encryption step according to method embodiments M1 and M2 or any method embodiment dependent thereon.
C2. The computer program product according to the preceding computer program product embodiment, wherein the computer program product further comprises instructions which, when the program is executed by the first device, cause the first device to generate the first device private key set (24) and the corresponding first device public key set (23), wherein each set comprises at least one key, according to M13 or any method embodiment dependent thereon.
C3. The computer program product according to any of the preceding computer program product embodiments, wherein the computer program product further comprises instructions which, when the program is executed by the first device, cause the first device to transmit the encrypted data elements (64) and/or the first device public key set (23) to the server system according to at M45 and/or M47 or any embodiment dependent thereon.
C4. The computer program product according to any of the preceding computer program product embodiments, wherein the computer program product further comprises instructions which, when the program is executed by the first device, cause the first device to store the at least one cryptographic key of the first device in the first device key memory (14) according to M53 or any method embodiment dependent thereon.
C5. A computer program product comprising instructions which, when the program is executed by the second device, cause the second device to perform the decryption step according to method embodiment M1 or any method embodiment dependent thereon.
C6. The computer program product according to any of the preceding computer program product embodiments with the features of C5, wherein the computer program product further comprises instructions which, when the program is executed by the second device, cause the second device to generate the second device private key set (44) and the corresponding second device public key set (43), wherein each set comprises at least one key, according to M14 or any method embodiment dependent thereon.
C7. The computer program product according to any of the preceding computer program product embodiments with the features of C5, wherein the computer program product further comprises instructions which, when the program is executed by the second device, cause the second device to receive the encrypted data elements (64) and/or the first device public key set (23) from the server system according to at M46 and/or M47 or any embodiment dependent thereon.
C8. The computer program product according to any of the preceding computer program product embodiments with the features of C5, wherein the computer program product further comprises instructions which, when the program is executed by the second device, cause the second device to perform the processing step according to M39 or any embodiment dependent thereon.
C9. The computer program product according to any of the preceding computer program product embodiments with the features of C5, wherein the computer program product further comprises instructions which, when the program is executed by the second device, cause the second device to transmit the second device public key set to the server system according to M47 or any embodiment dependent thereon.
C10. The computer program product according to any of the preceding computer program product embodiments with the features of C5, wherein the computer program product further comprises instructions which, when the program is executed by the second device, cause the second device to store the at least one cryptographic key of the second device in the second device key memory (34) according to M61 or any method embodiment dependent thereon.

Exemplary features of the invention are further detailed in the figures and the below description of the figures.

### Brief description of the figures

- Fig. 1: shows a first device, a second device and a server system performing an embodiment of a method.
- Fig. 2: shows the first and second device and the server system performing another embodiment of the method.
- Fig. 3: shows an embodiment of the first device.
- Fig. 4: shows an embodiment of the second device.

### Detailed figure description

For the sake of clarity, some features may only be shown in some figures, and others may be omitted. However, also the omitted features may be present, and the shown and discussed features do not need to be present in all embodiments.

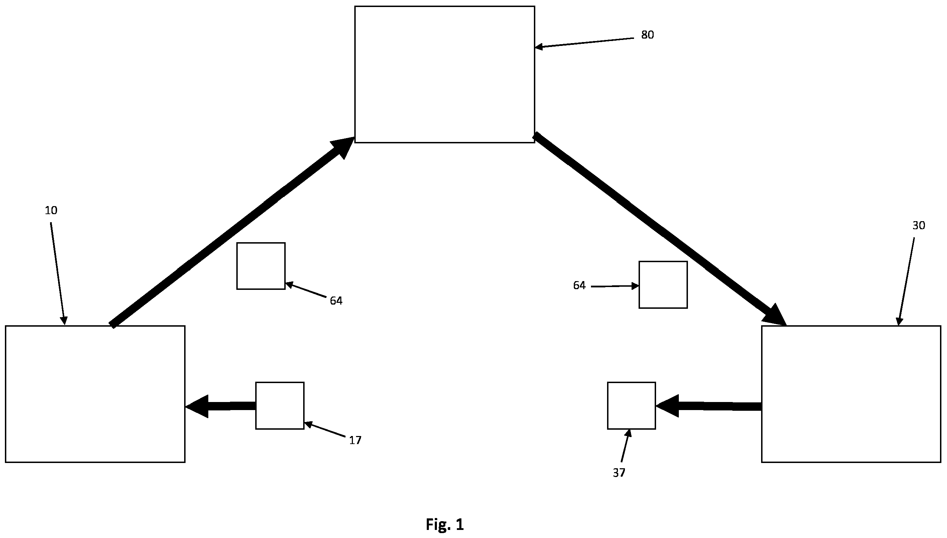

Fig. 1 shows a first device 10 and a second device 30. The devices may be devices of a same kind, or they may be different devices. The devices may for example be end-user computer devices, such as personal computers, laptop computers, tablet computers, smartphones or smart wearable devices such as smart glasses or smart watches.

The first device 10 transmits data to the second device 30. For example, the data can be transmitted by means of a server system 80. In this example, the first device 10 transmits the data to the server system 80, and the server system 80 transmits the data to the second device 30.

The first device 10, the second device 30 and the server system 80 may each comprise one or more processing units configured to carry out computer instructions of a program (i.e. machine readable and executable instructions). The processing unit(s) may be singular or plural. For example, at least one of the first device 10, the second device 30 and the server system 80 may comprise at least one of CPU, GPU, DSP, APU, ASIC, ASIP or FPGA. The first device 10, the second device 30 and the server system 80 may each comprise memory components, such as, main memory (e.g., RAM), cache memory (e.g. SRAM) and/or secondary memory (e.g. HDD, SDD). The first device 10, the second device 30 and the server system 80 may comprise volatile and/or non-volatile memory such an SDRAM, DRAM, SRAM, Flash Memory, MRAM, F-RAM, or P-RAM. The first device 10, the second device 30 and the server system 80 may each comprise internal communication interfaces (e.g. busses) configured to facilitate electronic data exchange between components thereof, such as, the communication between the memory components and the processing components.

The first device 10, the second device 30 and the server system 80 may each comprise external communication interfaces configured to facilitate electronic data exchange between these devices, other devices or networks.

For example, the server system 80 may comprise network interface card(s) that may be configured to connect the data processing system to a network, such as, to the Internet, and the first 10 and second device 30 may comprise components configured for wireless connection of the first device 10 and the second device 30 to a network, e.g. a WLAN-network or a cellular network. The first device 10, the second device 30 and the server system 80 may be configured to transfer electronic data using a standardized communication protocol.

The server system 80 may be a centralized or distributed computing system.

The first device 10 and the second device 30 system may each comprise user interfaces, such as:
· output user interface, such as:
   ∘ screens or monitors configured to display visual data (e.g. displaying graphical user interfaces of the questionnaire to the user),
   ∘ speakers configured to communicate audio data (e.g. playing audio data to the user),
· input user interface, such as:
   ∘ camera configured to capture visual data (e.g., capturing images and/or videos of the user),
   ∘ microphone configured to capture audio data (e.g., recording audio from the user),
   ∘ keyboard configured to allow the insertion of text and/or other keyboard commands (e.g. allowing the user to enter text data and/or other keyboard commands by having the user type on the keyboard) and/or
   ∘ trackpad, mouse, touchscreen, joystick - configured to facilitate the navigation through different graphical user interfaces of the questionnaire.

To put it simply, the first device 10, the second device 30 and the server system 80 may be a processing unit configured to carry out instructions of a program.

At least one of first device 10, the second device 30 and the server system 80 may be a system-on-chip comprising processing units, memory components and busses.

The server system 80 may comprise a server, a portion of a cloud computing system or a system emulating a server, such as a server system with an appropriate software for running a virtual machine. The server system 80 may be a processing unit or a system-on-chip that may be interfaced with a personal computer, a laptop, a pocket computer, a smartphone, a tablet computer and/or user interfaces (such as the upper-mentioned user interfaces).

In Fig. 1, the first device 10, the second device 30 and the server system 80 perform an embodiment of the method. In this embodiment, the first device 10 acquires patient data 17, e.g., by means of a camera of the first device 10. The patient data can for example comprise image data. This may be performed in an acquisition step.

As patient data 17 may be sensitive, they may require additional security measures for transmission to prevent disclosure to third parties during transmission.

Further referring to the example shown in Fig. 1, the first device 10 splits the patient data into several data elements and encrypts each patient data element with a different key shared with the second device 30. These keys may be part of a set of shared symmetric keys 60. The set is shared between the first 10 and second device 30. It may be agreed upon by known key agreement methods, such as Diffie Hellman Key Agreement. In particular, Elliptic Curve Diffie Hellman Key Agreement may be performed. By encrypting the data elements, encrypted data elements 64 are obtained. Generating the encrypted data elements 64 may be performed in a transport encryption step.

The encryption may be performed according to the ChaCha20Poly1305-algorithm. This algorithm is inter alia standardized in RFC 8439, which is incorporated herein by reference.

First device 10 transmits the encrypted data elements 64 to the server system 80. The transmission may be initiated by the first device 10, i.e., the encrypted data elements 64 may be actively sent to the server system 80. The transmission may also be initiated by the server system 80, i.e., the server system may load the encrypted data elements 64 from the first device 10. The server system 80 transmits the encrypted data elements 64 to the second device 30. This transmission may also be initiated by the server system 80 or by the second device 30.

The transmission from the first device 10 to the second device 30 may be performed in a patient data transmission step.

In the discussed embodiment of the method, the second device 30 decrypts the encrypted data elements 64 using at least some of the keys from the set of shared symmetric keys 60 to obtain the data elements in a decrypted form. The decrypted form may be identical or substantially identical to the original data elements. A difference may for example relate to meta data. The data elements may be combined to obtain decrypted patient data 37, which correspond to the patient data 17. The decrypting and combining may be performed in a decryption step.

In a specific embodiment of the method, the second device 30 processes the decrypted patient data 37. For example, second device 30 outputs at least a portion of the decrypted patient data 37, performs an analysis relating to at least a portion of the decrypted patient data 37 and/or encrypts at least a portion of the decrypted patient data 37 for secure storage.

In an example, the processing may comprise using a cryptographic key derived from an ID of the second device 20 and at least one of a code and a password of the user or user profile. In this example, the decrypted patient data 37 are encrypted with a symmetric key associated with the second device 46. The symmetric key associated with the second device 46 itself is stored in an encrypted form using the cryptographic key derived from an ID of the second device 20 and at least one of a code and a password of the user or user profile. Optionally, the symmetric key associated with the second device 46 is only decrypted when a user logs in to the second device 30 or unlocks the second device 30. The decrypted version of the symmetric key associated with the second device 46 is then generated upon said logging in or unlocking and discarded once the device is locked or the user logs of, preferably after a predetermined time span, such as 10 seconds.

In another example, the processing may comprise encrypting the decrypted patient data 37 with a symmetric key associated with the second device 46 that is random-generated by the device. In this example, the symmetric key associated with the second device 46 may be encrypted with a master key that is preferably stored in a strong box.

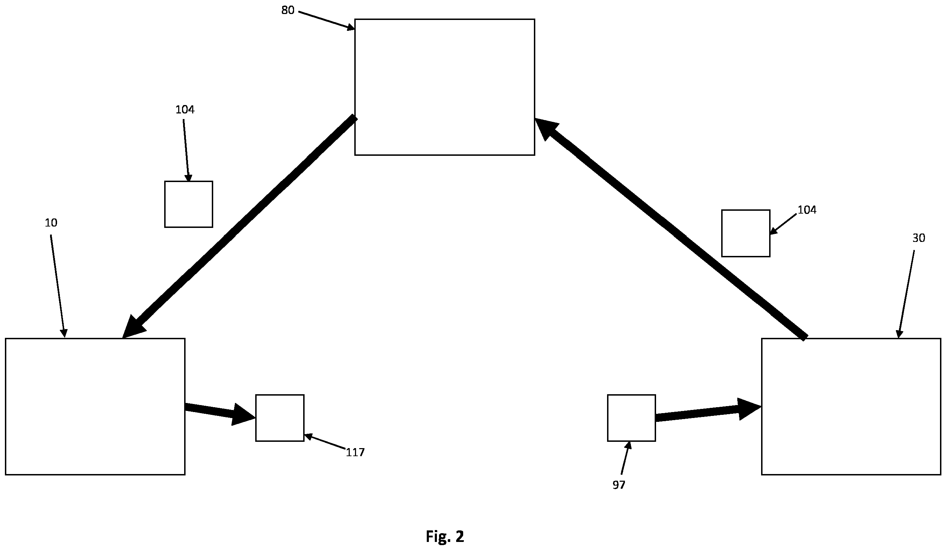

Fig. 2 shows another embodiment of the method. The embodiment of Fig. 2 may be performed in addition to the embodiment of the method shown in Fig. 1, however, the embodiment of Fig. 1 may also be performed without the embodiment shown in Fig. 2.

In the embodiment of Fig. 2, the second device 30 acquires second patient data 97. The second patient data 97 may relate to the patient data 17. For example, they may comprise a comment of a medical practitioner relating to the decrypted patient data 37. They may however also be unrelated to the decrypted patient data 37 and only coincidentally intended for transmission to the first device 10, e.g. if a user of the second device 30 seeks advice by a user of the first device 10 relating to another case. The second device 30 may acquire the patient data 97 in a second acquisition step.

The second device 30 then splits the second patient data into several second data elements and encrypts each of the second data elements with a different key shared with the first device 10, e.g. using keys from the set of shared symmetric keys 60, and thus obtaining second encrypted data elements 104. Generating the second encrypted data elements 104 may be performed in a second transport encryption step.

The second device 30 transmits the second encrypted data elements 104 to the first device 10. The transmission may be performed using the server system 80 as discussed with respect to the above-discussed embodiment of the method.

The first device 10 then decrypts the second encrypted data elements 104 using at least some of the keys from the set of shared symmetric keys 60 to obtain the data elements in a decrypted form. The data elements may be combined to obtain second decrypted patient data 117, which correspond to the second patient data 97. The decrypting and combining may be performed in a second decryption step.

In an exemplary embodiment of the method, the first device 10 processes the second decrypted patient data 117, as discussed for the second device 30 with respect to the above-discussed embodiment.

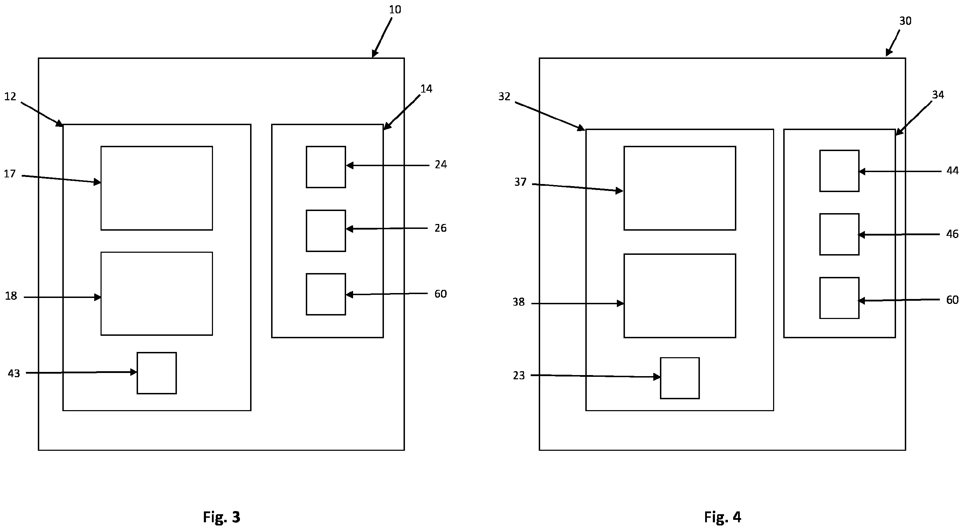

Fig. 3 shows an embodiment of the first device 10.

As set out above, the first device 10 may comprise a first device memory 12. The first device memory 12 may comprise a plurality of memory components or sections of components configured for data storage.

The first device memory 12 may temporarily store the patient data 17 or a portion thereof, e.g., during image acquisition if the patient data 17 comprise image data, or during sound acquisition, if the patient data 17 comprise audio data. However, the patient data 17 may be stored with an access restriction, e.g. allowing only or access by one or a limited number of applications running on the first device 10.

Further, the first device memory 12 may store first device encrypted patient data 18. The first device encrypted patient data may be obtained by encrypting the patient data 17 with a symmetric key associated with the first device 26. This key may for example not be shared with any other device.

Further, the first device 10, in the example of Fig. 3 the first device memory 12, may store a second device public key set 43 comprising at least one public key of the second device 30.

Additionally, the first device comprises a first device key memory 14. The first device key memory 14 may be a portion of the first device memory 12. However, the first device key memory 14 may also be a separate memory component. The first device key memory 14 stores at least one cryptographic key in encrypted form. The first device key memory may comprise a key memory section of the first device 10. The first device key memory 14 may be a trusted execution environment, i.e. a secure area of a processor of the first device. The first device key memory may also be a secure element, i.e. a separate microchip that can e.g. be accessed via the "strongbox API". The first device key memory may be a memory or memory portion foreseen for keeping cryptographic keys or passwords. In some cases, the first device key memory 14 may be a portion of the first device memory 12, however, all data stored in the first device key memory may be encrypted, e.g. using the Jetpack Library Security-Crypt of Android^{®}.

The first device key memory comprises 14 a first device private key set 24, i.e., a private key set comprising at least one private key associated with the first device. The private key set 24 corresponds to a first device public key set 23, comprising at least one public key corresponding to the at least one private key of the first device private key set.

Further, in the shown embodiment, the first device key memory 14 comprises the symmetric key associated with the first device 26 and the set of shared symmetric keys 60.

The data shown in Fig. 3 may not all be present at a same time on the first device 10. For example, as set out above, the patient data 17 may only be temporarily present in an unencrypted or decrypted form on the first device 10. Also, for example, not all encrypted patient data 18 may be encrypted at a same time, but only portions that are to be outputted or processed.

In an exemplary embodiment, the set of shared symmetric keys 60 is only present on the first device 10 after an initialisation step comprising key agreement with the second device 30 is performed.

Fig. 4 shows an exemplary embodiment of the second device 30.

In this embodiment, the second device 30 comprises a second device memory 32. The second device memory 32 may comprise a plurality of memory components or sections of components configured for data storage.

The second device memory 32 may temporarily store the decrypted patient data 37 or a portion thereof, e.g., during or immediately after decrypting the encrypted data elements 64. However, the decrypted patient data 37 may be stored with an access restriction, e.g. allowing only or access by one or a limited number of applications running on the first device 30.

Further, the first device memory 32 may store second device encrypted patient data 18. The second device encrypted patient data may be obtained by encrypting the decrypted patient data 37 with a symmetric key associated with the second device 46. This key may for example not be shared with any other device.

Further, in the embodiment shown, the second device 30 stores a first device public key set 23 comprising at least one public key of the first device 10.

Additionally, the second device comprises a second device key memory 34. The second device key memory 34 may be a portion of the second device memory 32. However, the second device key memory 34 may also be a separate memory component of the second device 30. The second device key memory 34 stores at least one cryptographic key in encrypted form.

Similar to the first device key memory 14, the second device key memory 34 may be a trusted execution environment, a secure element, or a portion of the second device memory 12 in which all data are encrypted. It is noted that in some embodiments, e.g. because of different hardware elements of the second device 30 and the first device 10, the first device key memory 14 and the second device key memory 34 may be implemented differently.

In the embodiment shown in Fig. 4, the second device key memory 34 comprises a second device private key set 44 corresponding to the second device public key set 43, as discussed with respect to the first device 30 and discussed with respect to Fig. 3.

Also, the second device key memory 34 comprises the symmetric key associated with the second device 46 and the set of shared symmetric keys 60.

The data shown in Fig. 4 may not all be present at a same time on the second device 30. For example, as set out above, the decrypted patient data 37 may only be temporarily present in a unencrypted or decrypted form on the first device 30, e.g. during the decryption step.

In an exemplary embodiment, the set of shared symmetric keys 60 is only present on the second device 30 after the initialisation step.

### Reference numerals

- 10: First device (D1)
- 12: First device memory
- 14: First device key memory
- 17: Patient data
- 18: First device encrypted patient data
- 23: First device public key set
- 24: First device private key set
- 26: Symmetric key associated with the first device
- 30: Second device (D2)
- 32: Second device memory
- 34: Second device key memory
- 37: Decrypted patient data
- 38: Second device encrypted patient data
- 43: Second device public key set
- 44: Second device private key set
- 46: Symmetric key associated with the second device

- 60: set of shared symmetric keys
- 64: Encrypted data elements

- 80: Server system
- 97: Second patient data
- 104: Second encrypted data elements
- 117: Second decrypted patient data

## Claims

1. A method, comprising
- an acquisition step comprising processing patient data (17) by a first device (10),
- a transport encryption step comprising splitting said patient data (17) into a plurality of patient data elements, and afterwards encrypting each patient data element, thus obtaining encrypted data elements (64) corresponding to the respective patient data elements, wherein the transport encryption step is performed by the first device,
- a patient data transmission step comprising transmitting the encrypted data elements (64) to a second device (30),
- a decryption step comprising decrypting the encrypted data elements (64) to obtain decrypted data elements and assemble the decrypted data elements to obtain decrypted patient data, wherein the decryption step is performed by the second device (30).

2. The method according to claim 1, wherein the method comprises an initialisation step, wherein the initialisation step comprises
- the first device (10) generating a first device private key set (24) and a corresponding first device public key set (23), and
- the second device (30) generating a second device private key set (44) and a corresponding second device public key set (43).

3. The method according to the preceding claim, wherein the method comprises transmitting the first device public key set (23) to the second device (30) and the second device public key set (43) to the first device (10), and
wherein the method comprises a key agreement step, wherein the key agreement step comprises agreement of a set of shared symmetric keys (60) between the first and second device (10, 30) based on the first and second device public key set (23, 43),
wherein the set of shared symmetric keys (60) comprises at least one shared symmetric key,
wherein particularly, generating the sets of corresponding keys comprises creating an elliptic curve for every pair of private and public keys, and wherein particularly, the set of symmetric keys is agreed upon by Elliptic curve Diffie Hellman Key agreement.

4. The method according to the preceding claim, wherein each of the first device public key set (23), the first device private key set (24), the second device public key set (43) and the second device private key set (44) comprises at least three keys,
wherein the set of symmetric keys (60) comprises at least three shared symmetric keys agreed by Diffie Hellman Key agreement based on the at least three public and private keys of the first and second device public and private key sets (23, 24, 43, 44),
wherein the transport encryption step is performed by the first device (10),
wherein the transport encryption step comprises encrypting each patient data element by symmetric encryption using a different key from the set of shared symmetric keys (60),
wherein the transport encryption step comprises splitting the patient data (17) into a plurality of n patient data elements, wherein n <= a number of symmetric keys in the set of shared symmetric keys (60).

5. The method according to any of the two preceding claims, wherein the first device comprises a first device key memory (14) for storing at least one cryptographic key of the first device,
wherein the method comprises storing the at least one symmetric key associated with the first device (26) in the first device key memory (14),
wherein the second device comprises a second device key memory (34) for storing at least one cryptographic key of the second device,
wherein the method comprises storing the set of shared symmetric keys (60) in the second device key memory (34).

6. The method according to any of the preceding claims, wherein the transport encryption step comprises encrypting each patient data element by symmetric encryption using the set of shared symmetric keys (60).

7. The method according to the preceding claim, wherein the decryption step is performed by the second device (30), and
wherein the decryption step comprises decrypting each patient data element by symmetric encryption using the set of shared symmetric keys (60).

8. The method according to any of the preceding claims, wherein the patient data transmission step comprises transmitting the encrypted data elements (64) from the first device (10) to the server system (80).

9. The method according to any of the preceding claims, wherein the method further comprises
- a second acquisition step comprising processing second patient data (97) by the second device (30),
- a second transport encryption step comprising splitting the second patient data (97) into a plurality of second patient data elements, and afterwards encrypting each of the second patient data elements, thus obtaining second encrypted data elements (104) corresponding to the respective patient data elements,
- a second patient data transmission step comprising transmitting the second encrypted data elements (104) to the first device (30),
- a second decryption step comprising decrypting the second encrypted data elements (104) to obtain second decrypted data elements and assemble the second decrypted data elements to obtain second decrypted patient data (117).

10. The method according to any of the preceding claims, wherein the acquisition step comprises at least one of acquiring and receiving the patient data (17) by the first device (10), and wherein the acquisition step comprises encrypting the patient data (17) using at least one symmetric key associated with the first device (26) and thus obtaining first device encrypted patient data (18); and/or
wherein the method comprises a processing step performed by the second device, wherein the processing step comprises encrypting the decrypted patient data (37) using at least one symmetric key associated with the second device (46) and thus obtaining second device encrypted patient data (38).

11. A system, comprising a first device (10) and a second device (30),
wherein the first device (10) is configured for performing an acquisition step comprising processing patient data (17), and for performing a transport encryption step comprising splitting said patient data (17) into a plurality of patient data elements, and afterwards encrypting each patient data element, thus obtaining encrypted data elements (64) corresponding to the respective patient data elements,
wherein the second device (30) is configured for performing a decryption step comprising decrypting the encrypted data elements (64) to obtain decrypted data elements and assembling the decrypted data elements to obtain decrypted patient data,
wherein the system is configured for performing a patient data transmission step comprising transmitting the encrypted data elements (64) to the second device (30).

12. The system according to the preceding claim, wherein the system comprises a server system (80),
wherein the first device (10) is configured for generating a first device private key set (24) and a corresponding first device public key set (23), wherein each of these key sets comprises at least one key,
wherein the second device (30) is configured for generating a second device private key set (44) and a corresponding second device public key set (43), wherein each of these key sets comprises at least one key,
wherein each of these key sets comprises at least three keys,
wherein the system is configured for transmitting the first device public key set (23) to the second device (30) and the second device public key set (43) to the first device (10).

13. The system according to the preceding claim,
wherein the system is configured for performing a key agreement step, wherein the key agreement step comprises agreement of a set of shared symmetric keys (60) between the first and second device (10, 30) based on the first and second device public key set (23, 43),
wherein the set of symmetric keys (60) comprises at least three shared symmetric keys, wherein the keys are agreed by Diffie Hellman Key agreement based on the at least three public and private keys of the first and second device public and private key sets (23, 24, 43, 44)
wherein the first device (10) is configured for performing the transport encryption step,
wherein the transport encryption step comprises encrypting each patient data element by symmetric encryption using a different key from the set of shared symmetric keys (60),
wherein the transport encryption step comprises splitting the patient data (17) into a plurality of n patient data elements, wherein n <= a number of symmetric keys in the set of shared symmetric keys (60).

14. A computer program product comprising instructions which, when the program is executed by the first device, cause the first device to perform the acquisition step and the transport encryption step according to any of claims 1-10.

15. A computer program product comprising instructions which, when the program is executed by the second device, cause the second device to perform the decryption step according to any of claims 1-10.
